# EUROPEAN PATENT SPECIFICATION

(11) **EP 0 925 194 B1**
(45) Date of publication and mention of the grant of the patent: **24.11.2004**
(21) Application number: 96916484.7
(22) Date of filing: 16.05.1996
(51) Int. Cl.: B41M 7/00, G03G 8/00, B41M 5/00, G03G 7/00, C08L 27/06

(54) **PROTECTIVE CLEAR LAYER FOR IMAGES**
KLARE SCHICHT ZUM SCHUTZ VON BILDERN
COUCHE CLAIR DE PROTECTION D'IMAGES

(43) Date of publication of application: 30.06.1999
(73) Proprietor: MINNESOTA MINING AND MANUFACTURING COMPANY, St. Paul, Minnesota 55133-3427 (US)
(72) Inventor: BULL, Sally, Jo, North Saint Paul, MN 55109 (US)
(74) Representative: VOSSIUS & PARTNER
(86) International application number: PCT/US1996/007079
(87) International publication number: WO 1997/043128

(56) References cited:
- WO-A-93/22137
- US-A- 5 370 960
- DATABASE WPI Section Ch, Week 8546 Derwent Publications Ltd., London, GB; Class A14, AN 85-286254 XP002022688 & JP 60 195 146 A (NIPPON CARBIDE KOGY KK) , 3 October 1985
- RESEARCH DISCLOSURE, no. 323, 1 March 1991, page 198 XP000176287 "IMPROVEMENT OF IMAGE SURFACE QUALITY BY PLANARIZATION WITH A SECOND INDEX-MATCHING MEDIUM"
- DATABASE WPI Section Ch, Week 8719 Derwent Publications Ltd., London, GB; Class A82, AN 87-133423 XP002022689 & JP 62 074 910 A (TOYO SODA MFG CO LTD) , 6 April 1987

## Description

This invention relates to an opticatly clear layer for application to images on substrates, a composite comprising said layer and methods for protecting an imaged substrate.

Electrographic processes, inkjet processes, and the like, for producing electronic graphics are rapidly becoming preferred methods for the formation of images. The Scotchprint™ Electronic Graphics System commercially available from Minnesota Mining and Manufacturing Company of St. Paul, Minnesota ("3M Company") uses an electrostatic process for forming an image and transferring that image to a durable substrate. One description of the process is found in U.S. Pat. No. 5,114,520 (Wang et al.).

The image formed on a durable substrate requires protection from abrasion and ultraviolet light. An optically clear, transparent overlaminate, comprising an optically clear, transparent durable film covered on a major surface by an optically clear, transparent pressure sensitive adhesive, is preferably applied over the image on the durable substrate. Commercially available clear, transparent overlaininates include Product Nos. 8910, 8911, 8912, 8913, 8920, 8930, and 8931 films from the Commercial Graphics Division of 3M Company, St. Paul, Minnesota. Of these, 8913 and 8930 are optically clear. Some of the clear, transparent overiaminates include a vinyl or polyester film covered with a pressure sensitive adhesive, which in turn is protected by a paper or polyester liner until usage. Other clear, transparent overlaminates include a vinyl or polyester film. covered with a hot melt adhesive, and a scrim liner to prevent blocking.

In the absence of the use of a clear, transparent overtaminate, some fabricators apply a protective clear coat of a vinyl/acrylic material, such as Product Nos. 3920, 8920, 9720, 66201, and 2120 protective coatings from the Commercial Graphics Division of 3M Company to protect the durable, imaged substrate. But such application of a liquid to a solid flat surface is subject to the inconsistencies of climate, circumstances, and craftsmen.

While the optically clear, transparent overlaminates known in the art are quite acceptable for large format graphics uses, vinyl-based optically clear, transparent overlaminate films remain extremely elusive to achieve.

The art of electronic graphics needs an inexpensive, durable, optically clear, transparent layer to protect images formed on a major surface of a substrate, when compared to other transparent layers known to those skilled in the art. This is especially true when the substrate is a perforated film with holes to allow viewing through the non-imaged surface.

One aspect of the present invention is an inexpensive, durable, optically clear transparent layer according to claim 1 formed on a polymeric release liner that has specific surface properties to permit the layer of the present invention to have optical clarity within acceptable ranges.

A layer to cover and protect an imaged substrate comprises a composition comprising vinyl chloride resin, optional acrylic resin, optional plasticizer, and optional stabilizer, wherein the composition is obtainable by having been formed on a polymeric release liner having a Sheffield value of from 1 to 10 and preferably thickness values from 0.05 mm (0.002 inches) to 0.12 mm (0.005 inches).

Another aspect of the present invention is a method of forming an inexpensive, durable, optically clear, transparent layer formed on an image residing on a durable substrate. A method of forming the layer comprises the steps of forming the optically clear, transparent layer of the present invention having two major surfaces from an organosol on a first polymeric release liner having a Sheffield value of from 1 to 10 and preferably a thickness ranging from 0.05 mm to 0.127 mm; optionally adhering a field of pressure sensitive adhesive to a second release liner; and optionally laminating the field of pressure sensitive adhesive to an exposed major surface of the optically clear, transparent layer; optionally removing the first polymeric release liner; and adhering said optically clear, transparent layer or, if present, said pressure sensitive adhesive to an imaged substrate.

Another aspect ofthe invention is a composite of an inexpensive, durable, optically clear, transparent layer covering a durable, imaged substrate. The composite comprises an optically clear, transparent layer covering a durable, imaged substrate, wherein the optically clear, transparent layer comprises the layer identified above, and wherein the substrate includes a perforated film.

A feature of the invention is the formation of the durable, optically clear, transparent layer on a polymeric release layer from a thermally processable composition, wherein the surface properties of the polymeric release layer determine the optical clarity of the layer of the present invention.

Another feature of the invention is the transfer of the durable, optically clear, transparent layer from the second release layer to the durable, imaged substrate.

An advantage of the invention is the ability to transfer the optically clear, transparent layer from a release layer to an imaged substrate.

Another advantage of the invention is the ability of the durable, optically clear, transparent layer to provide stabilization and protection from abrasion and ultraviolet light degradation.

Therefore, the present invention also includes a method of protecting an imaged substrate, comprising the steps of forming a layer of the present invention on a polymeric release liner; and laminating the layer of the present invention to the imaged substrate.

Embodiments of the invention are described with reference to the following drawings.

Fig. 1 illustrates a cross-sectional view of the durable, optically clear, transparent layer of the present invention prepared on a polymeric release layer.

Fig. 2 illustrates a cross-sectional view of the durable, optically clear, transparent layer of the present invention during a lamination step of the process of the present invention.

Fig. 3 illustrates a cross-sectional view of the durable, optically clear, transparent layer of the present invention in combination with an imaged substrate.

Fig. 4 illustrates a cross-sectional view of the durable, optically clear, transparent layer of the present invention in combination with an imaged substrate as another embodiment of the invention.

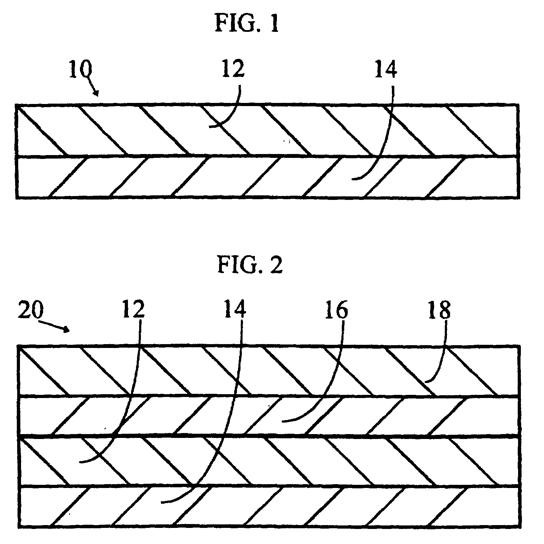

Fig. 1 shows a preparation composite 10 comprising a durable, optically clear, transparent layer 12 of a thermally processable organosol composition on a polymeric release liner 14 having smooth surface properties helpful in the formation of the optical clarity properties of layer 12.

Liner 14 can be made from a polymeric release liner material known to those skilled in the art that has a surface roughness, measured according to Sheffield test method TAPPI Test T 538 om-88 published by the Technical Association for the Pulp and Paper Industry (TAPPI) of Atlanta, Georgia, of from 1 to 10 Sheffields. Selection of the liner 14 should recognize the nature of the surface of liner 14 contacting layer 12 will determine the appearance of the outer surface of layer 12 on the durable, imaged substrate. Nonlimiting examples of release liners include silicone coated polyester, urea alkyd coated polyester, and the like. Particularly preferred for release liner 14 is a urea alkyd coated polyester having a urea polymer coating comprising a polyurea alkyd formulation of 0.005 mm caliper on a 0.07 mm polyester film.

Release liner 14 can have a gloss ranging from 100 to 150 and preferably from 120 to 140. Gloss is measured by a Gardner 60° Glossmeter using published techniques known to those skilled in the art such as ASTM Standard No. D523.

Durable, optically clear, transparent layer 12 comprises a thermally processable composition containing vinyl chloride, optional additional thermally processable resins, an optional plasticizer, and an optional stabilizer where the layer can be prepared from an organosol with a sufficient melt temperature to be thermally processable to cause layer 12 to form on the polymeric release liner 14 without causing harm to the surface of liner 14 responsible for formation of the optical clarity properties of the layer 12.

Vinyl chloride is an industrial chemical commercially available from many sources throughout the world. Preferably, the vinyl chloride useful in the present invention is a vinyl chloride resin comprising Geon vinyl chloride resin commercially available from B. F. Goodrich Chemical Company of Cleveland, Ohio.

When used as another, but optional resin, in the formation of layer 12, acrylic resin is readily available as an industrial chemical commercially available from many sources throughout the world. Desirably, the acrylic resin useful in layer 12 comprises from 75,000 to 125,000 number average molecular weight. Preferably, the acrylic resin useful in the present invention is an acrylic resin comprising Elavacite acrylic resin having 100,000 molecular weight commercially available from ICI Resins of Wilmington, Delaware.

Optionally, the composition for layer 12 comprises a plasticizer to aid in the formation of layer 12 and its transfer to a durable, imaged substrate. Nonlimiting examples of plasticizer include 1,4-butylene glycol; adipic acid; butyloctyl phthalate; hydrocarbon resins; di(2-ethylhexyl) azelate; dibutyl azelate; dihexyl azelate; and the like. Particularly preferred for a plasticizer, if present in the composition of layer 12, is Vikoflex 7170 plasticizer commercially available from ATOChem of Philadelphia, PA.

Optionally, the composition for layer 12 comprises a stabilizer to aid in the formation of layer 12, provide ultraviolet resistance, and assist transfer to a durable, imaged substrate. Nonlimiting examples of stabilizer include Hal-Lub, Hal-Base, Hal-Carb, Hal-Stab brand hindered amine light stabilizers commercially available from Hal-stab Company of Hammond, Indiana; Nuostabe V1923 brand ultraviolet light stabilizer commercially available from Witco of Greenwich, Connecticut; Cosorb brand ultraviolet light stabilizer commercially available from 3M Company of St. Paul, Minnesota; and Tinuvin brand HAL stabilizers commercially available from Ciba-Geigy Corp. of Greensboro, N.C. Particularly preferred for a stabilizer, if present in the composition of layer 12, is Tinuvin 1130 and Tinuvin 292 HAL stabilizers from Ciba-Geigy or Nuostabe V 1923 stabilizer.

The layer 12 can have a composition ranging from 40 to 60 weight percent of vinyl chloride, from 10 to 30 weight percent acrylic resin, from 0 to 33 weight percent plasticizer, and from 0 to 10 weight percent stabilizer.

Desirably, layer 12 can have a composition ranging from 45 to 55 weight percent of vinyl chloride, from 15 to 30 weight percent acrylic resin, from 0 to 20 weight percent plasticizer, and from 0 to 8 weight percent stabilizer.

Preferably, layer 12 can have a composition ranging from 47 to 60 weight percent of vinyl chloride, from 16 to 27 weight percent acrylic resin, from 10 to 20 weight percent plasticizer, and from 2 to 6 weight percent stabilizer.

Composition for layer 12 can be prepared by dissolving the ingredients into solvents such as ketones and aromatics, preferably di-isobutyl ketone, mineral spirits, methyl ethyl ketone, methyl isobutyl ketone and toluene, more preferably in equal parts of such solvents. Layer 12 is knife or gravure coated on liner 14 with a dry coating weight ranging from 0.70 to 1.10 g to yield a dry thickness of from 0.04 mm to 0.08 mm. Preferably, liner 14 has a thickness ranging from 0.5 mm to 1 mm and layer 12 has a thickness ranging from 0.5 mm to 1 mm.

After coating, layer 12 is dried on liner 14 to remove solvents at a temperature ranging from 90°C to 120°C for about 2 minutes, then it is fused in an oven for 30 seconds to 60 seconds at 175°C to 205°C. Composite 10 is then stored until usage, optionally, but preferably as a portion of a lamination with a field of pressure sensitive adhesive (PSA) and a second release liner protecting the PSA field.

Fig. 2 illustrates a laminated composite 20, formed from the lamination of a PSA field 16 (protected by second release liner 18) laminated to a major surface of layer 12 opposite polymeric release liner 14.

Field 16 and liner 18 are combined in a separate step prior to lamination according to techniques well known to those skilled in the art.

Field 16 can be any conventional pressure sensitive adhesive that has optical clarity at least as good as and preferably better than the optical clarity properties of layer 12. Nonlimiting examples of such adhesives include polyacrylates, polyvinylethers, natural rubber, silicone, rubber, styrene butadiene, cis-polybutadiene, syrene-isoprene block copolymers. Preferably, adhesives used in the present invention include vinyl/acrylic blends having a weight percent ratio ranging from 50/50 to 90/10 and preferably 75/25 and a viscosity of 1100-1500 mPa·s.

Field 16 can have a laminated thickness of from 0.013 mm to 0.05 mm, and preferably from 0.015 to 0.03 mm.

Release liner 18 can be made from a release liner material known to those skilled in the art. Preferably, the release liner material 18 has a surface roughness, measured according to the TAPPI Test T 538 om-88 of from 5 to 40 Sheffields. Selection of the liner 18 will affect the appearance of layer 12 and PSA field 16 during storage and prior to usage, which may be material to customer preference for the layer of the present invention. Nonlimiting examples of release liners include silicone coated polyester, silicone coated paper, urea alkyd coated polyester, urea alkyd coated paper, and the like. Particularly preferred for release liner 18 is a silicone coated polyester commercially available from Rexam Release of Chicago, IL having a silicone coating of 0.005 mm caliper on a 0.07 mm polyester film.

Release liner 18 can have a gloss ranging from 80 to 130 and preferably from 100 to 130. Gloss is measured by a Gardner 60° Glossmeter using published techniques known to those skilled in the art such as ASTM Standard No. D523.

After lamination of PSA field 16 to layer 12, first polymeric release liner 14 can be removed prior to storage and use.

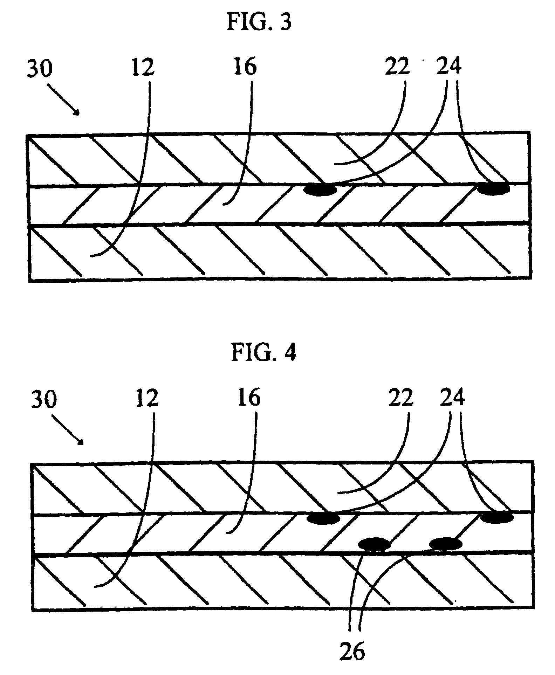

Fig. 3 illustrates the cross-sectional appearance of final composite 30 composed of layer 12 having PSA field 16 adhered to a major surface thereof and also adhered to a substrate 22 having an image 24 on the major surface thereof to which field 16 is adhered. Layer 12 and PSA field 16 contact a major surface of substrate 22 without enveloping substrate 22. Preferably, substrate 22 has image 24 on one major surface and a field 24 of adhesive (not shown) on the opposing major surface. Layer 12 is inappropriate to cover the field 24 of pressure sensitive adhesive.

Image 24 can be formed using any conventional process. Nonlimiting examples include electrographic processes, electrophotographic processes, electrostatic processes, inkjet printing processes, and the like. When Scotchprint™ 8601 transfer paper (3M Company, St. Paul, MN) is used, an additional surface treatment process is preferred to be used, in order to retain clarity through the film. This process is described in copending, coassigned, U.S. Patent Application Serial No. 08/577,417, the disclosure of which is incorporated by reference herein.

Image 24 can comprise dyes, pigments, or combinations of both from toners, inks, or paints, all as known to those skilled in the art.

Preferably, image 24 comprises compositions capable of withstanding processing temperatures of at least 100°C, and preferably at least 105°C. This film surface is receptive to most inks, pigments, toners, dyes, and paints.

Substrate 22 can be any transparent substrate known to those skilled in the art of image graphics. Nonlimiting examples include transparent glass, transparent acrylic sheets and transparent polycarbonate sheets.

Layer 12 and PSA field 16 are transferred from liner 18 on composite 20 to image 24 and substrate 22 by application of pressure of a range sufficient to adhere PSA field 16 to substrate 22 and preferably from about 1 kg to about 5 kg.

Layer 12 and PSA field 16 can have a combined caliper of from 0.05 mm to 0.13 mm when adhered to image 24 and substrate 22. Preferably, the caliper ranges from 0.10 mm to 0.13 mm.

After layer 12 and PSA field 16 are applied to image 24 and substrate 22 , liner 18 can be removed, rolled, and can be recycled for later use.

Machinery conventionally used in the formation of durable imaged substrates can be used for the pressure sensitive transfer of layer 12 to substrate 22. Nonlimiting examples of machinery include laminators such as Scotchprint™ 9540 and 9542 brand laminators from 3M Company.

Fig. 4 illustrates an alternate embodiment of the present invention where an image 26 is placed on layer 12 of composite 10 prior to adhering of PSA field 16 and then transfer layer 12 and PSA field 16, with image 26 between layer 12 and PSA field 16, is adhered to a substrate 22 (with or without a second image 24 as seen in Fig. 4) to become final composite 30. In this embodiment, one can use an electrostatic imaging transfer process such as the Scotchprint™ Electronic Imaging system and electrostatic imaging paper, such as No. 8601 image transfer paper, both commercially available from 3M Company, to place a 4-color toner image from the paper on layer 12, after which a PSA field 16 is adhered and the liner 14 is peeled away leaving image 26 on layer 12 for lamination transfer to a desirable durable film.

Use of layer 12 provides abrasion and ultraviolet light protection to image 24, image 26, or both, and substrate 22.

Abrasivity for layer 12 of the present invention before the image 24 wears away ranges from 500 to 2000 cycles with CS-10 abrasion wheels commercially available from Taber Industries of Tonowanda, New York and preferably from 500 to 1000 cycles, depending on the type of substrate used.

Layer 12 provides protection to image 24 and substrate 22 without detracting from the appearance of the image. Layer 18 is optically clear and transparent as determined by visual perception. Preferably, optical clarity gives acceptable vision when measured with a standard vision test with and without the film between one's eyes and the vision chart.

Further embodiments of the invention are described in the following examples.

### Examples

### Example 1: Preparation of protective clear layer.

A protective clear layer was prepared on an urea alkyd coated polyester having a urea polymer coating comprising a polyurea alkyd formulation of 0.005 mm caliper on a 0.07 mm polyester film from the following components.

46.7 weight percent Geon 178 vinyl resin (B.F. Goodrich, Cleveland, Ohio); 17.9 weight percent Elvacite acrylic resin (ICI Resins, Wilmington, Delaware); 17.2 weight percent Vikoflex 7170 plasticizer (ATOChem, Philadelphia, PA.); 2.3 weight percent Tinuvin 292 HAL stabilizer (Ciba-Geigy, Greensboro, N.C.); 2.3 weight percent Nuostabe V1923 stabilizer (Witco, Greenwich, CT) and 13.6 weight percent of a solvent system of two parts of di-isobutyl ketone and one part mineral spirits.

A layer was knife coated on the liner with a wet thickness of 0.127 mm and dried to remove solvents at a temperature of 120°C for 2 minutes, and then fused in an oven for 45 seconds at 175°C to a dry thickness of about 0.05 mm.

### Example 2: Preparation of adhesive laminate.

An adhesive was prepared from the following components:

| | |
|---|---|
| VYHH (Union Carbide, Danbury, CT) | 69 parts |
| Acryloid B82 (Rohm and Haas, Philadelphia, PA) | 17 parts |
| Paraplex G62 (C.P. Hall, Bedford Park, IL) | 14 parts |

The components were dissolved in a solvent mixture comprised of equal parts xylol, methyl ethyl ketone and methyl isobutyl ketone to yield a final solution viscosity of 1100 - 1600 m Pa·s. A field of solution was knife coated at 0.076 mm wet thickness on a silicone coated polyester release liner having a silicone coating of 0.005 mm caliper on a 0.07 mm polyester film (Rexam Release, Chicago, IL.) and dried at 120°C for 2 minutes to obtain a dry thickness of 0.0025 mm.

### Example 3: Laminate

The layer on liner from Example 1 was then contacted to the adhesive field from Example 2 to produce the laminate as seen in Fig. 2, applying a pressure of about 2.3 kg/cm².

## Claims

1. An optically clear and transparent layer (12, 22) to cover and protect an imaged substrate (24), comprising:
a composition comprising vinyl chloride resin, optional acrylic resin, optional plasticizer, and optional stabilizer, wherein the composition is obtainable by having been formed on a polymeric release liner having smoothness of a Sheffield value of from 1 to 10.

2. The layer of Claim 1, wherein the layer is part of a composite comprising a field of pressure sensitive adhesive and a second release liner.

3. The layer of Claim 1, further comprising acrylic resin.

4. The layer of Claim 1, further comprising plasticizer and stabilizer.

5. The layer of Claim 3, wherein the amount of vinyl chloride resin ranged from 49 to 72 weight percent; the amount of acrylic resin ranges from 9 to 33 weight percent; the amount of plasticizer ranges from 0 to 25 weight percent; and the amount of stabilizer ranges from 0 to 8 weight percent.

6. The layer of Claim 4, wherein the amount of vinyl chloride resin ranges from 55 to 65 weight percent, the amount of acrylic resin ranges from 16 to 27 weight percent; the amount of plasticizer ranges from 10 to 16 weight percent; and the amount of stabilizer ranges from 2 to 6 weight percent.

7. The layer of Claim 6, wherein the layer has a caliper ranging from 0.05 mm to 0.13 mm.

8. The layer of Claim 7, wherein the layer is adhered on the imaged substrate using a pressure ranging from 0.7 kg/cm² to 4.2 kg/cm².

9. A method of protecting an imaged substrate, comprising the steps of:
(a) forming the optically clear, transparent layer any of claims 1 to 8 according to having two major surfaces from an organosol on a first polymeric release liner having a Sheffield value of from 1 to 10;
(b) optionally adhering a field of pressure sensitive adhesive to a second release liner; and
(c) optionally laminating the field of pressure sensitive adhesive to an exposed major surface of the optically clear, transparent layer; and
(d) optionally removing the first polymeric release liner; and
(e) adhering said optically clear, transparent layer or, if present, said pressure sensitive adhesive to an imaged substrate.

10. The method of Claim 9, further comprising the step of removing the second release liner.

11. The method of Claim 9, wherein the laminating step uses a pressure ranging from 1.7 kg/cm² to 4.2 kg/cm².

12. The method of Claim 9, wherein the amount of vinyl chloride resin ranges from 40 to 60 weight percent; the amount of acrylic resin ranges from 10 to about 30 weight percent, the amount of plasticizer ranges from 0 to 25 weight percent; and the amount of stabilizer ranges from 0 to 8 weight percent.

13. The method of Claim 9, wherein the amount of vinyl chloride resin ranges from 45 to 55 weight percent; the amount of acrylic resin ranges from 15 to 30 weight percent; the amount of plasticizer ranges from 10 to 16 weight percent; and the amount of stabilizer ranges from 2 to 6 weight percent.

14. The method of Claim 13, wherein the layer has a caliper ranging from 0.04 mm to 0.08 mm.

15. The method of Claim 9, wherein the imaged substrate is a durable film.

16. A composite comprising an optically clear, transparent layer covering an imaged substrate wherein the substrate includes a perforated film, and wherein the optically clear, transparent layer comprises a layer of according to any of claims 1 to 9.

17. A method of protecting an imaged substrate, comprising the steps of: forming a layer according to any of claims 1 to 9 on a polymeric release liner; and laminating the layer to an imaged substrate.

18. The method of protecting the imaged substrate according to Claim 17, wherein the layer also has an image on a major surface thereof.

## Patentansprüche

1. Optisch klare und transparente Schicht (12, 22) zum Abdecken und Schützen eines bebilderten Substrats (24), umfassend:
eine Zusammensetzung, welche Vinylchloridharz, wahlweise Acrylharz, wahlweise Weichmacher und wahlweise Stabilisator umfasst, wobei die Zusammensetzung erhältlich ist, dadurch dass sie auf einer Polymertrennlage mit einer Glattheit mit einem Sheffield-Wert von 1 bis 10 gebildet wurde.

2. Schicht nach Anspruch 1, wobei die Schicht Teil eines Komposits ist, welches ein Feld von Haftklebstoff und eine zweite Trennlage umfasst.

3. Schicht nach Anspruch 1, welche ferner Acrylharz umfasst.

4. Schicht nach Anspruch 1, welche ferner Weichmacher und Stabilisator umfasst.

5. Schicht nach Anspruch 3, wobei die Menge an Vinylchloridharz 49 bis 72 Gewichtsprozent beträgt; die Menge an Acrylharz 9 bis 33 Gewichtsprozent beträgt; die Menge an Weichmacher 0 bis 25 Gewichtsprozent beträgt und die Menge an Stabilisator 0 bis 8 Gewichtsprozent beträgt.

6. Schicht nach Anspruch 4, wobei die Menge an Vinylchloridharz 55 bis 65 Gewichtsprozent beträgt; die Menge an Acrylharz 16 bis 27 Gewichtsprozent beträgt; die Menge an Weichmacher 10 bis 16 Gewichtsprozent beträgt und die Menge an Stabilisator 2 bis 6 Gewichtsprozent beträgt.

7. Schicht nach Anspruch 6, wobei die Schicht eine Dicke aufweist, welche von 0,05 mm bis 0,13 mm beträgt.

8. Schicht nach Anspruch 7, wobei die Schicht unter Verwendung eines Drucks, welcher 0,7 kg/cm² bis 4,2 kg/cm² beträgt, auf das bebilderte Substrat geklebt wird.

9. Verfahren zum Schutz eines bebilderten Substrats, umfassend die folgenden Schritte:
(a) Bilden der optisch klaren, transparenten Schicht nach einem der Ansprüche 1 bis 8 mit zwei Hauptoberflächen aus einem Organosol auf einer ersten Polymertrennlage mit einem Sheffield-Wert von 1 bis 10;
(b) gegebenenfalls Kleben eines Feldes von Haftklebstoff auf eine zweite Trennlage; und
(c) gegebenenfalls Laminieren des Feldes von Haftklebstoff auf eine freie Hauptoberfläche der optisch klaren, transparenten Schicht; und
(d) gegebenenfalls Entfernen der ersten Polymertrennlage; und
(e) Kleben der optisch klaren, transparenten Schicht oder, falls vorhanden, des Haftklebstoffs auf ein bebildertes Substrat.

10. Verfahren nach Anspruch 9, welches ferner den Schritt des Entfernens der zweiten Trennlage umfasst.

11. Verfahren nach Anspruch 9, wobei der Laminierschritt einen Druck verwendet, welcher 1,7 kg/cm² bis 4,2 kg/cm² beträgt.

12. Verfahren nach Anspruch 9, wobei die Menge an Vinylchloridharz 40 bis 60 Gewichtsprozent beträgt; die Menge an Acrylharz 10 bis 30 Gewichtsprozent beträgt; die Menge an Weichmacher 0 bis 25 Gewichtsprozent beträgt und die Menge an Stabilisator 0 bis 8 Gewichtsprozent beträgt.

13. Verfahren nach Anspruch 9, wobei die Menge an Vinylchloridharz 45 bis 55 Gewichtsprozent beträgt; die Menge an Acrylharz 15 bis 30 Gewichtsprozent beträgt; die Menge an Weichmacher 10 bis 16 Gewichtsprozent beträgt und die Menge an Stabilisator 2 bis 6 Gewichtsprozent beträgt.

14. Verfahren nach Anspruch 13, wobei die Schicht eine Dicke von 0,04 mm bis 0,08 mm aufweist.

15. Verfahren nach Anspruch 9, wobei das bebilderte Substrat eine haltbare Folie ist.

16. Komposit, umfassend eine optisch klare, transparente Schicht, welche ein bebildertes Substrat bedeckt, wobei das Substrat eine perforierte Folie beinhaltet, und wobei die optisch klare, transparente Schicht eine Schicht nach einem der Ansprüche 1 bis 9 umfasst.

17. Verfahren zum Schutz eines bebilderten Substrats, welches die folgenden Schritte umfasst: Bilden einer Schicht nach einem der Ansprüche 1 bis 9 auf einer Polymertrennlage und Laminieren der Schicht auf ein bebildertes Substrat.

18. Verfahren zum Schutz des bebilderten Substrats nach Anspruch 17, wobei die Schicht auch ein Bild auf einer Hauptoberfläche davon aufweist.

## Revendications

1. Couche optiquement translucide et transparente (12, 22) destinée à recouvrir et protéger un substrat comportant une image (24), comprenant :
une composition comprenant une résine de chlorure de vinyle, une résine acrylique facultative, un plastifiant facultatif, et un stabilisateur facultatif, dans laquelle la composition peut être obtenue par formation sur une doublure anti-adhésive polymère ayant un lissé correspondant à une valeur Sheffield de 1 à 10.

2. Couche selon la revendication 1, dans laquelle la couche fait partie d'un matériau composite comprenant une zone d'adhésif de contact et une deuxième doublure anti-adhésive.

3. Couche selon la revendication 1, comprenant en outre une résine acrylique.

4. Couche selon la revendication 1, comprenant en outre un plastifiant et un stabilisateur.

5. Couche selon la revendication 3, dans laquelle la quantité de résine de chlorure de vinyle représente un pourcentage pondéral de 49 à 72 % ; la quantité de résine acrylique représente un pourcentage pondéral de 9 à 33 % ; la quantité de plastifiant représente un pourcentage pondéral de 0 à 25 % ; et dans laquelle la quantité de stabilisateur représente un pourcentage pondéral de 0 à 8 %.

6. Couche selon la revendication 4, dans laquelle la quantité de résine de chlorure de vinyle représente un pourcentage pondéral de 55 à 65 % ; la quantité de résine acrylique représente un pourcentage pondéral de 16 à 27 % ; la quantité de plastifiant représente un pourcentage pondéral de 10 à 16 % ; et dans laquelle la quantité de stabilisateur représente un pourcentage pondéral de 2 à 6 %.

7. Couche selon la revendication 6, dans laquelle la couche a une épaisseur de 0,05 mm à 0,13 mm.

8. Couche selon la revendication 7, dans laquelle on fait adhérer la couche au substrat comportant une image en utilisant une pression de 0,7 kg/cm² à 4,2 kg/cm².

9. Méthode de protection d'un substrat comportant une image, comprenant les étapes qui consistent à :
(a) former la couche optiquement translucide et transparente selon l'une quelconque des revendications 1 à 8 ayant deux surfaces principales, à partir d'un organosol, sur une première doublure anti-adhésive polymère ayant une valeur Sheffield de 1 à 10 ;
(b) éventuellement, faire adhérer une zone d'adhésif de contact à une deuxième doublure anti-adhésive ; et
(c) éventuellement, appliquer par stratification la zone d'adhésif de contact sur une surface principale exposée de la couche optiquement translucide et transparente ; et
(d) éventuellement, retirer la première doublure anti-adhésive polymère ; et
(e) faire adhérer ladite couche optiquement translucide et transparente ou, s'il est présent, ledit adhésif de contact à un substrat comportant une image.

10. Méthode selon la revendication 9, comprenant en outre l'étape qui consiste à retirer la deuxième doublure anti-adhésive.

11. Méthode selon la revendication 9, dans laquelle l'étape d'application par stratification utilise une pression de 1,7 kg/cm² à 4,2 kg/cm².

12. Méthode selon la revendication 9, dans laquelle la quantité de résine de chlorure de vinyle représente un pourcentage pondéral de 40 à 60 % ; la quantité de résine acrylique représente un pourcentage pondéral de 10 à 30 % ; la quantité de plastifiant représente un pourcentage pondéral de 0 à 25 % ; et dans laquelle la quantité de stabilisateur représente un pourcentage pondéral de 0 à 8 %.

13. Méthode selon la revendication 9, dans laquelle la quantité de résine de chlorure de vinyle représente un pourcentage pondéral de 45 à 55 % ; la quantité de résine acrylique représente un pourcentage pondéral de 15 à 30 % ; la quantité de plastifiant représente un pourcentage pondéral de 10 à 16 % ; et dans laquelle la quantité de stabilisateur représente un pourcentage pondéral de 2 à 6 %.

14. Méthode selon la revendication 13, dans laquelle la couche a une épaisseur de 0,04 mm à 0,08 mm.

15. Méthode selon la revendication 9, dans laquelle le substrat comportant une image est un film durable.

16. Matériau composite comprenant une couche optiquement translucide et transparente recouvrant un substrat comportant une image, dans lequel le substrat intègre un film perforé, et dans lequel la couche optiquement translucide et transparente comprend une couche selon l'une quelconque des revendications 1 à 9.

17. Méthode de protection d'un substrat comportant une image, comprenant les étapes qui consistent à former une couche selon l'une quelconque des revendications 1 à 9 sur une doublure anti-adhésive polymère, et à appliquer par stratification la couche sur un substrat comportant une image.

18. Méthode de protection du substrat comportant une image selon la revendication 17, dans laquelle la couche comporte aussi une image sur une surface principale de celle-ci.
